# EUROPEAN PATENT APPLICATION

(11) **EP 3 466 276 A1**
(43) Date of publication of application: **10.04.2019**
(21) Application number: 17382665.2
(22) Date of filing: 05.10.2017
(51) Int. Cl.: A23L 29/238, A23P 10/30, A23L 33/21

(54) **DIETARY FIBER COMPOSITION FOR PROTECTING BIOACTIVE COMPOUNDS DURING THE PHYSIOLOGICAL DIGESTION PROCESS**

(71) Applicant: Pharmactive Biotech Products, S.L., 28049 Madrid (ES); Consejo Superior de Investigaciones Científicas (CSIC), 28006 Madrid (ES)
(72) Inventor: DEL CASTILLO BILBAO, María Dolores, 28006 Madrid (ES); INAREJOS GARCIA, Antonio Manuel, 28049 Madrid (ES); RAYMOND, Jean Marie, 28049 Madrid (ES)
(74) Representative: Pons

(57) **Abstract**

The invention relates to a composition comprising galactomannan in an amount ranged from 36% to 40% w/w, fructooligossacharides in an amount of 2% to 4% w/w and at least one bioactive compound. The invention also relates to the uses of said composition for the administration of said bioactive compounds protected from its degradation during the physiological digestion process.

## Description

### TECHNICAL FIELD OF THE INVENTION

The invention relates to a composition comprising a galactomannan, fructooligosaccharides (FOS) and bioactive compounds of polar nature, mainly, polyphenols from carob (*Ceratonia siliqua* L) pods extract. The adequate ratio of galactomannan (soluble fibers) and FOS (non soluble fibers) protects the bioactive compounds of polar nature against deterioration during digestion process, increasing the bioavailability thereof in the organism. Thus, the present invention refers to the field of administration of bioactive compounds.

### BACKGROUND ART

It is possible to find many documents regarding food products comprising several kinds of fibers and additional ingredients, such bioactive compounds, which can be used to prevent or to treat different pathologies or to promote a well-being state, see for example:
International patent application WO2013/132456 relates to prebiotic mixtures comprising at least one plant polysaccharide fiber and at least one vegetal extract, for use in the prevention and/or the treatment of gastrointestinal pathologies exhibiting an alteration of the intestinal flora balance; wherein said fiber is between 50% and 90% and said extract is between 5% and 25% by weight of said mixture;
International patent application WO2012/044242 relates to food product comprising viscous fibres (including carob gum) between 4 and 35% by dry weight. Additionally, one or more components selected from the group of indigestible carbohydrates (for example fructooligosaccharide -FOS-), polyphenols, fatty acids and probiotics can be added. The claimed food product may improve glucose tolerance/insulin sensitivity already in the late post-prandial phase following the acute meal.
International patent application WO2011/060123 relates to nutritional compositions comprising a fructooligosaccharide (FOS) in an amount of 35 to 44% by weight; a polysaccharide that is not a partially hydrolyzed guar gum such as, for example, an arabinogalactan in an amount of 50% to 38% by weight; and inulin in an amount of 12% to 24% by weight. The FOS and the polysaccharide may be present in a weight ratio of about 1:1. More specifically, the FOS and inulin may be present in a weight ratio of about 7:3. These compositions are useful to promote gut microbiota balance and health.
International patent application WO2006/134409 relates to synergistic compositions comprising prebiotic components selected from fructose polymers, either containing a glucose (G) end-group, or without a glucose end-group, and one or more components of a group of prebiotics consisting of modified or unmodified starch and partial hydrolysates thereof, partially hydrolysed inulin, natural oligofructoses, fructooligosaccharides (FOS), lactulose, galactomannan and suitable partial hydrolysates thereof, indigestible polydextrose, acemannan, vanous gums, indigestible dextrin and partial hydrolysates thereof, transgalactooligosaccharides (GOS), xylooligosaccharides (XOS), beta-glucan and partial hydrolysates thereof, together if desired with phytosterol/phytostanol components and their suitable esters, and if desired other plant extracts, mineral components, vitamins and additives.
Rutz et al. Carbohydrate Polymers 98 (2013) 1256-1265 discloses a solution to encapsulate active substances like carotenoids and phenolic compounds from purple Brazilian cherry juice using a combination of the polysaccharides xantham gum and galactomannan.
Patent application US2003/0059458 discloses a composition comprising water insoluble carob fiber in an amount of about 10 to about 90% by weight and a encapsulating material of at least one water soluble dietary fiber in an amount of about 10 to about 90%, being the water soluble dietary fiber a natural or a chemically modified polysaccharide.
However, in most of the cases, most of the bioactive compounds are lost during digestion decreasing the final amount which is available for the subject. Furthermore, the compositions of the state of the art specifically intended to protect bioactive compounds during the digestion, mainly by using polysaccharides, increasing the sugar content and glucose metabolism of the subject. Accordingly, there is a need for providing compositions not only useful for administering bioactive compounds of polar nature but also for increasing the availability thereof to the organism and, at the same time, reducing the content of sugars in the subject.

### DETAILED DESCRIPTION OF THE INVENTION

The inventors of the present invention have discovered that when a composition comprises galactomannan (soluble fibers) in an amount of from 36% to 40% by weight based on the total weight of the composition and a fructooligossacharide (non soluble fibers) in an amount of from 2% to 4% by weight based on the total weight of the composition, the bioactive compounds of polar nature present in said composition are, surprisingly, protected from being digested in the stomach (see example), avoiding the almost complete loss of these bioactive compounds during the digestion process, and resulting in a higher presence of these bioactive compounds of polar nature after digestion. As a consequence, the amount of bioactive compounds to be administered can be decreased because there is a low lost thereof during digestion. Further to this, the inventors have also discovered that after digestion process, not only the bioactive compounds of polar nature are present, but also soluble and insoluble fibers, and therefore, the composition of the present invention comprising bioactive compounds of polar nature may play a role to prevent from risk factors that commonly cluster together (like dyslipidemia, hypertension and hyperglycemia) and have been termed the metabolic syndrome.

Recently, the National Cholesterol Education Program's Adult Treatment Panel III report (ATP III) defined criteria used to identify patients with the metabolic syndrome. ATP III identified some risk factors of the metabolic syndrome that relate to cardiovascular disease (CVD): abdominal obesity, atherogenic dyslipidemia, raised blood pressure, insulin resistance, glucose intolerance, proinflammatory and prothrombotic states. The pathogenesis of the metabolic syndrome is not known but there seem to be three potential etiological categories: obesity and disorders of adipose tissue, insulin resistance and a number of independent factors that mediate specific components of the metabolic syndrome (Beilby, J. 2004, Clin Biochem Rev. 25(3): 195-198).

Therefore, due to the protective effect associated to the combination of galactomanann and FOS over the bioactive compounds of polar nature, these compounds are useful for the manufacture of a composition of soluble and insoluble fibers for the administration of several functional molecules and/or for the development of nutraceuticals more effective at even lower dosage.

In the present invention, an adequate composition of soluble and insoluble fibers is presented as a natural "encapsulating form" to protect bioactive compounds of polar nature, such as phenolic compounds, from digestion process and therefore to improve their beneficial effect on the organism.

Thus, in a first aspect the invention relates to a composition, hereinafter "composition of the invention", comprising a galactomannan in an amount of from 36% to 40% by weight based on the total weight of the composition, a fructooligossacharide in an amount of from 2% to 4% by weight based on the total weight of the composition, and at least one bioactive compound.

In the context of the present invention, the term "composition" refers to any substance comprising any combination of three or more molecules, wherein said molecules are, at least, galactomannan, a fructooligosaccharide (FOS) and a bioactive compound of polar nature such as a phenolic compound.

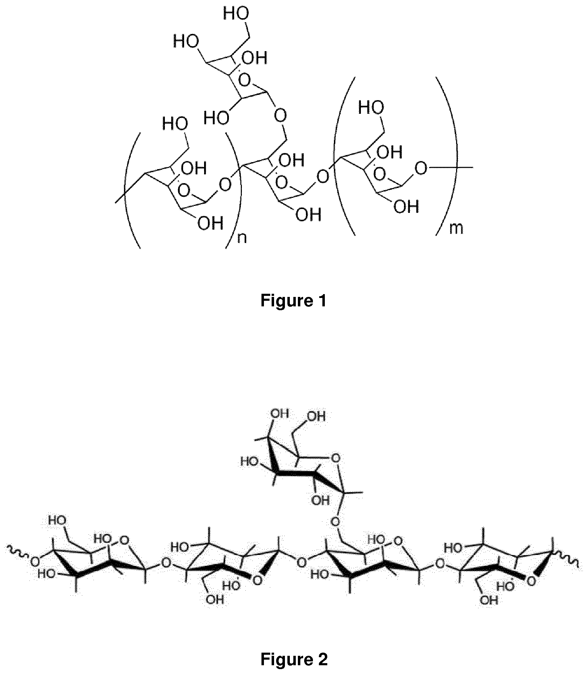

The term "galactomannan" refers to a polysaccharide consisting of a mannose backbone with galactose side groups, more specifically, a (1-4)-linked beta-D-mannopyranose backbone with branchpoints from their 6-positions linked to alpha-D-galactose, i.e. 1-6-linked alpha-D-galactopyranose, as represented in **Figure 1****.** Galactomannan can be isolated from multiple sources. There are four major sources of seed galactomannans: locust bean (*Ceratonia siliqua*), guar (*Cyamopsis tetragonoloba*), tara (*Caesalpinia spinosa* Kuntze), and fenugreek (*Trigonella foenum-graecum* L.). Depending on the mannose:galactose ratio, examples of galactomannans include, without limiting to, fenugreek gum (mannose:galactose -1:1), guar gum (mannose:galactose -2:1), tara gum (mannose:galactose -3:1) and locus bean gum or *carob gum* (mannose:galactose -3:1). Any galactomannan can be used in the composition of the invention. In a particular embodiment, the galactomannan comprises a mannose:galactose ratio of about 3:1 from Carob (*Ceratonia siliqua* L) gum.

The source of galactomannan is the endosperm of carob seed (*Ceratonia siliqua* L) ground with an amount of galactomannan no less than 75% (dry weight) (see **Figure 2**). In a particular embodiment, the amount of galactomannan in the final fibers complex (composition) of the present invention is 36% by weight based on the total weight of the composition.

The fructooligosaccharide refers to oligofructose produced by partial enzymatic hydrolysis of chicory inulin. Oligofructose consist of oligosaccharides based on fructose units linked together by β(2-1) linkages. The degree of polymerization chiefly ranges between 2 and 8, which corresponds to the total number of monosaccharides units. In another particular embodiment, the FOS comprises no less than 90% of oligofructose (%, dry matter). In a particular embodiment of the composition of the invention, the amount of fructooligosacharide is 3% by weight based on the total weight of the composition.

Thus, in a particular embodiment, the amount of galactomannan is 36% by weight based on the total weight of the composition and/or the amount of fructooligosascharide is 3% by weight based on the total weight of the composition.

As explained above, the present invention is based on the fact that the presence of galactomannan and a fructooligosaccharide (FOS) in a particular amount protects the bioactive compounds of polar nature present in a composition from digestion process.

In the present invention, the term "bioactive compounds of polar nature" refers to the ingredients or components which are biologically active, i.e. are responsible for conferring to the composition therapeutic properties, and these compounds are soluble in water or in mixtures of water and ethanol [not more than 20% of ethanol (v/v) in the final solvent mixture]

In a particular embodiment of the composition of the invention, the presence of fibers in the final product protects the bioactive compounds of polar nature during the digestion process, chiefly phenolic compounds. Any natural extract of polar nature can be used in the context of the present invention. Various extracts and plant powders are incorporated into the composition of the invention depending on the desired properties according to the end use of said compositions.

Examples of extracts with therapeutic properties which can be used in the composition of the invention include, without being limited to, botanical extracts standardized to bioactive compounds, such as, one or more of those of *Panax ginseng* (red, Korean ginseng), *Panax ginseng* (white, Chinese ginseng), *Rhodiola rosea* (golden root), *Panax quinquefolium* (American ginseng), *Eleutherococcus senticosus* (Siberian ginseng), *Cynara scolymus* (artichoke), *Uncaria tomentosa* (Cat's claw), *Lepidium meyenii* (maca, Peruvian ginseng), *Paullinia cupana* (guarana), *Croton lechleri* (Sangre de Grado), *Whitania somnifera* (ashwagandha, Indian ginseng), *Panax japonicus* (Japanese ginseng), *Panax vietnamensis* (Vietnamese ginseng), *Panax trifolius, Panax pseudoginseng, Panax notoginseng, Malpighia glabra* (acerola), *Ylex paraguayiensis* (Yerba mate), *Astragalus membranaceus* (astragalus), *Stevia rebaudiana* (stevia), *Pfaffia paniculata* (Brazilian ginseng, suma), *Ginkgo biloba, Tabebuia impetiginosa* (Pau d'arco), *Echinacea purpurea, Peumus boldus* (boldo), *Gynostemma pentaphyllum* (Jiaogulan, also known as Southern Ginseng or Xiancao), *Sutherlandia frutescens* (African ginseng), *Aloe vera* (aloe), *Cistanche salsa, Cistanche deserticola* (and other Cistanche sp.), *Codonopsis pilosula* ("poor man's ginseng."), *Nopal opuntia* (Prickly pear cactus), *Citrus sinensis* (*Citrus aurantium*) and other members of the citrus family (lemon, lime, tangerine, grapefruit), *Camelia sinensis* (tea), *Plantago psyllium* (psyllium), *Amaranth edulis* and other *amaranth* sp. (amaranth), *Commiphora mukul* (guggul lipid), *Serenoa repens, Serenoa serrulata* (saw palmetto), *Cordyceps sinensis* (Cordycaps), *Lentinula edodes* (Shitake), *Ganoderma lucidium* (Reishi), *Grifola frondosa* (maitake), *Tremella fuciformis* (Silver ear), *Poria cocos* (Hoelen), *Hericium erinaceus* (Lion's Mane), *Agaricus blazei* (Sun mushroom), *Phellinus linteus* (Mulberry yellow polypore), *Trametes versicolor, Coriolus versicolor* (Turkey tails), *Schizophyllum commune* (Split gill), *Inonotus obliquus* (Cinder conic), *oat bran,* rice bran, linseed, garlic, *Ceratonia siliqua* (locust been gum or flour from the seeds of carob tree), *Cyanopsis tetragonoloba* (guar gum, EU Food additive code E412), *Xanthomonas campestris* (xanthan gum), *Olea europaea* (olive) and related herbal extracts with bioactive compounds of polar nature

In a particular embodiment, the bioactive compound is carob extract, particularly, carob pods extract. In another particular embodiment, the bioactive compound is, olive extract or a mixture of carob extract and olive extract.

The extracts used as bioactive compounds in the composition of the invention can include multiple antioxidant compounds such as polyphenols, carotenoids, enzymes, Gluthatione, hormones, lipid associated chemicals, minerals, vitamins, saponines, steroids, etc. Examples of polyphenols include, but without being limited to, simple phenolic acids, hydroxycinnamic acids and derivatives, flavonoids, isoflavones, lignans, anthocyans, phytosterols, tannins and related components of polar nature. In a particular embodiment, bioactive compounds comprise flavonoids and phenolic antioxidants.

The amount of the bioactive compounds of polar nature in the composition of the invention can encompass a wide range of concentrations. Nevertheless, in a particular embodiment, the composition comprises an amount of the bioactive compounds from 0.1% to 50% by weight based on the total weight of the composition.

The composition of the invention may be a pharmaceutical composition or a nutritional composition. The pharmaceutical composition and the nutritional composition may be formulated, but not limited to, in solid, semi-solid, liquid or gaseous forms, such as tablet, capsule, microcapsule, powder, granule, ointment, solution, paste, suppository, injection, inhalant, gel, microsphere or aerosol. In a particular embodiment, the composition is formulated for oral administration.

The composition of the invention comprises a prophylactically or therapeutically effective amount of at least one bioactive compound of polar nature. The term "prophylactically effective amount" as used herein means that the bioactive compound contained in the composition is in sufficient quantity to exert its effect on the subject. The effect will depend on the kind of the bioactive compound used in the composition of the invention. Examples of bioactive compounds have been disclosed above.

Furthermore, compositions of the present invention may include a carrier. Depending on the kind of compositions of the present invention, a carrier may be a dietary suitable carrier or a pharmaceutically acceptable carrier, as long as it is compatible with the bioactive principle of the composition. Examples of a dietary suitable carrier include, but are not limited to, dietary suitable excipients and diluents. The term "excipient" relates to a substance that aids the absorption of any of the bioactive compound of the composition of the invention, stabilizes said bioactive compound or aids the preparation of the composition in the sense of giving consistency or contributing flavors that make it more enjoyable. Thus, excipients may have the function of holding the components together, such as starches, sugars or celluloses, a sweetening function, coloring function, drug protection function, the function of filling a tablet capsule, sachets, softgels and related galenic forms. Therefore, the term "excipient" is defined as the material included in the galenic forms, is added to the bioactive compounds or their associations to enable their preparation and stability, modify their organoleptic properties or determine the physical-chemical properties of the pharmaceutical composition and its bioavailability.

The term "nutritional composition" relates to a food or a dietary supplement that regardless of providing nutrients to the subject eating them has a beneficial effect on one or more bodily functions, so as to provide a better state of health and well-being. Accordingly, such nutritional composition may be destined for the prevention and/or treatment of a disease or for the reduction of disease risk factors, such as those related wit metabolic syndrome.

The inventors of the present invention have discovered that the presence of galactomannan and a FOS in a particular amount protects the bioactive compounds of polar nature present in a composition from being digested. In this way, the bioactive compounds can be administered in a lower dose for exerting its therapeutic effect in a subject which, combined with the soluble an insoluble fibers of the composition, can be used for treating and/or preventing any disease in a more effective way.

Consequently, in another aspect, the present invention relates to the composition of the invention for use as a medicament. Depending on the therapeutic properties of the bioactive compounds, e.g. the extract, the present composition can be used for treating and/or preventing a particular disease. In a particular embodiment, when the bioactive compounds are present in a carob extract, particularly, carob pods extract, the invention relates to a composition for use in the treatment and/or prevention of risk factors related to metabolic syndrome.

The term "treatment", as understood herein, relates to fight the effects of a disease or pathological condition of interest in a subject (preferably a mammal and, more preferably, a human) that includes:
(i) inhibiting the disease or pathological condition, i.e. arresting its development;
(ii) relieving the disease or the pathological condition, i.e. causing regression of the disease or the pathological condition or its symptoms;
(iii) stabilizing the disease or pathological condition.

The term "prevention" as understood in the present invention consists of preventing the onset of the disease, that is, preventing the disease or pathological condition from occurring in a subject (preferably a mammal and, more preferably, a human), particularly when said subject is predisposed to develop the pathological condition.

The term "metabolic syndrome" refers to the set of metabolic alterations that jointly increase the risk of diabetes and cardiovascular disease, including the combination of obesity, dyslipidemia (for example, triglycerides and hypercholesterolemia) and hyperglycemia.

In view of the properties shown by the combination of a galactomannan and a fructooligosaccharide as explained above, the present invention relates to the use of a composition comprising a galactomannan and a fructooligosaccharide for naturally encapsulating a bioactive compound of polar nature.

Thus, in another aspect, the invention relates to the use of a galactomannan in an amount of from 36% to 40% by weight based on the total weight of the composition, and a fructooligossacharide in an amount of from 2% to 4% by weight based on the total weight of the composition, for naturally protect the bioactive compounds of polar nature from digestion process.

The terms galactomannan, fructooligossacharide and bioactive compounds of polar nature have been explained in previous paragraphs.

In a particular embodiment, the amount of galactomannan is 36% by weight based on the total weight of the composition and/or the amount of fructooligosascharide is 3% by weight based on the total weight of the composition.

In another particular embodiment, the galactomannan comprises a mannose:galactose ratio of about 3:1.

In another particular embodiment, the bioactive compound is carob extract, particularly, carob seed extract or carob pod extract.

In another particular embodiment, the bioactive compound further comprises one or more botanical extract different from carob extract. Examples of botanical extracts have been disclosed previously in the present disclosure.

In another particular embodiment, the bioactive compounds of polar nature are concentrated in an amount of from 0.1% to 50% by weight based on the total weight of the composition.

In another aspect, the invention relates to a method for obtaining the composition of the invention, hereinafter "method of the invention", comprising mixing bioactive compounds of polar nature with (i) galactomannan in an amount of from 36% to 40% by weight based on the total weight of the composition and (ii) a fructooligossacharide in an amount of from 2% to 4% by weight based on the total weight of the composition.

In a particular embodiment of the method of the invention, the amount of galactomannan is 36% by weight based on the total weight of the composition and/or the amount of fructooligosaccharide is 3% by weight based on the total weight of the composition.

In another particular embodiment of the method of the invention, the galactomannan comprises a mannose:galactose ratio of about 3:1.

In another particular embodiment of the method of the invention, the galactomannan comes from carod seeds and/or the fructooligosaccharide comes from inulin.

In another particular embodiment of the method of the invention, the bioactive compound is carob extract, particularly, carob seed extract or carob pod extract.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### DESCRIPTION OF THE DRAWINGS

**Figure 1** discloses a segment of galactomannan showing mannose backbone (below) with a branching galactose unit (top), wherein m>1 and n>1.
**Figure 2** shows the chemical structure of galactomannan in carob. It is a linear chain of 1,4-beta-D mannopyranose units with 1,6-linked alpha-D galactopyranose units attached to every fifth mannose.
**Figure 3** shows a manufacturing flow chart of the carob (*Ceratonia siliqua* L) pods extract.

### EXAMPLE

### Galactomannan and fructooligosaccharides protect bioactive principles against deterioration during digestion process

### I. MATERIAL AND METHODS

### Samples

The samples tested comprised carob extract as bioactive compounds of polar nature, locust bean gum (>75% galactomannan) and Fructooligosaccharides (>90% purity).

### Plant material

Deseeded and chopped carob pods were obtained, ground and then extracted in the processing factory of Pharmactive (Madrid, Spain). The kibbles were stored in a cool and dry place until analysis and extraction process.

### Polar phenols extraction from carob pods

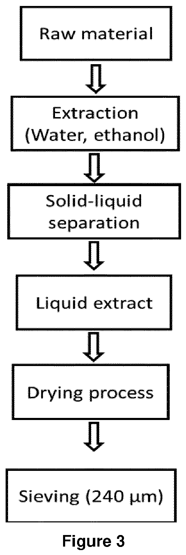

A general scheme illustrating the extraction process can be observed in **Figure 3****.** The ground raw material was extracted by means of a mixture of the solvents water and ethanol, the presence of ethanol was not more than 20% in the final solvents mixture.

The industrial extraction of the polar phenolic compounds from the selected carob pods was carried out with 100% water or with hydro alcoholic mixtures, but the ethanol proportion must be 20% (v/v) as maximum.

During the extraction process the temperature control was a critical parameter and had to be limited to no more than 85°C in order to avoid the deterioration of some phenolic components. No organic solvents such as ethyl acetate, hexane, petroleum ether, acetone, methanol or the like were used for the carob pods extraction of the present invention.

The crude extract was in the form of dense liquid, intense brown and characteristic aroma of carob (*Ceratonia siliqua* L.), which was cooled to room temperature with subsequent removal of moisture, and different drying techniques can be used for this stage.

The last step comprised of adjusting the particle size by milling the dry extract in a hammer mill or blades, always controlling that the grinding temperature does not affect the bioactive compounds, and sieving the grind through a light sieve with a maximum particle size of 240 µm.

In this way, two different batches were obtained from carob pods extracts, and called E300 and E400, enriched in bioactive compounds of polar nature. After extraction process, the final carob pods extracts (E300 or E400) was mixed with the soluble/insoluble fibers complex (galactomannan from carob seeds and FOS from inulin) in order to obtain the final product (composition) of the present invention. The final amount of galactomannan and fructooligosaccharide in the composition is, respectively, 36% and 3% by weight based on the total weight of the composition. This concrete composition was analyzed before and after "in vitro" digestion for bioaccesibility of bioactive compounds: total polar phenols with antioxidant capacity, together with glycaemic sugars **(Tables 1-3).**

### In vitro digestion protocol

The *in vitro* digestion protocol of the different individual components of the present invention together with the final product comprises three phases: 1) cephalic or salivary phase, 2) gastric phase, and 3) intestinal or duodenal phase. All processes were carried out in the same falcon tube.

### Preparation of in vitro digests

Abiotic digestion *in vitro* was carried out on three stages (oral, gastric and intestinal) as described by Hollebeeck et al., 2013. Briefly, the salivary step was performed at pH 6.9 and 37 °C, 5 minutes of incubation, 3.9 units alpha-amilase/mL under aerobic conditions. The gastric step was performed at pH 2, 37°C during 90 minutes of incubation, 71.2 units pepsin/mL under anaerobic conditions while the abiotic duodenal step was run at pH 7, 37 °C and 150 minutes, 9.2 mg pancreatin and 55.2 mg bile extract/mL under anaerobic conditions. The final mixture was centrifuged at 5000 r.p.m. for 40 minutes at 4°C. The soluble fraction obtained by centrifugation was frozen at -20°C and freeze-dried. The resulting powder was stored at -20°C until analysis. This process was performed in duplicate, and the corresponding digested samples were analyzed in triplicated.

### Total polar phenolic compounds

Folin-Ciocalteu adapted to a micromethod format was the test selected for analysis of total polar phenolic compounds in the different samples (Contine, Baccelini, Massantini & Anelli, 2008). The reaction was initiated by mixing 10 µL of sample with 150 µL of Folin-Ciocalteu reagent. After incubation at room temperature during 3 minutes, 50 µL of sodium bicarbonate solution was added. The kinetics of the reaction at 37 °C was followed for 120 minutes by measuring the absorbance at 735 nm once every minute. The gallic acid calibration curve was used for quantification. Results were expressed as percentage by dry weight. All measurements were performed in triplicate.

### Total antioxidant capacity

ABTS˙ decolorisation assay was performed according to Oki, Nagai, Yoshinaga and Nishiba (2006). An ABTS˙⁺ aqueous solution was prepared by adding 140 mmol/L potassium persulfate (44 µL) to a 7 mmol/L ABTS˙⁺ aqueous solution (2.5 mL), and the mixture was then allowed to stand for 16 hours at room temperature. The working solution of the radical ABTS˙⁺ was prepared by diluting the stock solution 1:75 (v/v) in 5 mmol/L sodium phosphate buffer pH 7.4 to obtain an absorbance value of 0.7±0.02 at 734 nm. Samples (30 µL) were added to 270 µL working solution ABTS˙⁺ in a microplate. The absorbance was measured at 734 nm for 10 minutes at 30 °C with measurements every 2 minutes. After 5 minutes, the reaction was complete. Trolox and Gallic acid calibration curves were used for quantification. Results were expressed as percentage (dry weight). All measurements were performed in triplicate.

### Insoluble and soluble fibers

Insoluble and galactomannan fibers were determined using respectively the "Total Dietary Fibre Assay Kit" and the "Galactomannan Kit" (Megazyme International Ireland, Ireland) as per the manufacturer's instructions, and based on the enzymatic-gravimetric method. Results are expressed as percent (%, dry weight).

### Moisture

Prior to analysis, the capsules employed for the gravimetric assay of moisture, were heated at 110 °C for 15 minutes, cooled in a desiccator at room temperature. The moisture content was determined by the gravimetric method according to the AOAC-925.10. The samples were weighted accurately (∼1g), and dried until constant weight in an oven at 105 °C. Results were expressed as percentage.

### Glycaemic sugars

Glucose, mannose and fructose were determined employing the Megazyme kit according to the manufacturer's instructions (Megazyme KMANGL, Ireland) adapted to micromethod format. A Bio Tek Power Wave TM XS microplate reader (Bio Tek Instruments, USA) was used to measure the samples absorbance at 340 nm. D-mannose, D-glucose, D-mannose and D-fructose in each sample was expressed as g glucose, mannose and fructose in percentage (dry weight).

### II. RESULTS

### Bioaccessibility of bioactive compounds

### 1. Glycaemic sugars

As shown in **Table 1,** initially the glucose percentage of both samples was similar, between 5.6 and 4.8% for the E300 and E400 samples respectively, and that after digestion an increase of about two fold the initial concentration to 12.1 and 9.8%, respectively. It is also observed for the case of fructose, which increases after digestion about two folds its concentration for E300 (7.1-14.5%) and E400 (5.7-9.9%).

When carob gum with galactomannan (GLMN) is included, the release of simple sugars is limited after digestion. In the case of glucose, a decrease in glucose release of 10% was observed for the sample E300 + GLMN (12.1-11.3%) and, however, for the sample E400 + GLMN the opposite effect was observed, increasing one 5% (9.8-10.3%). A similar result was obtained for fructose, decreasing its release by 18% (14.5-11.8%) for E300 + GLMN, and on the other hand there was a 14% increase for sample E400 + GLMN (9.9-11.2%).

The addition of 3% fructooligosaccharides (FOS) to the above formula results in a greater decrease in the release of the simple sugars glucose and fructose. The release of glucose after digestion decreases around 30% for the samples E300 + GLMN + FOS (from 12.1 to 8.4%) and 20% for E400 + GLMN + FOS (from 9.8 to 7.9%) with respect to the initial digested extracts. With regards to fructose content, same effect was observed, but in this case the decrease was approximately 33% for E300 + GLMN + FOS (from 14.5 to 9.7%) and 2% for E400 + GLMN + FOS (from 9.9 to 9.7%) compared to the initial digested extracts.

**Table 1. Initial composition of simple sugars and corresponding bioaccesibility after in vitro digestion of carob extracts, together with galactomannan and fructooligosaccharides.**

| **Initial samples** | **E300 (Batch I)** | | | **E400 (Batch II)** | | |
|---|---|---|---|---|---|---|
| | **Extracto** | **Ext+GLMN** | **Ext+GLMN+FOS** | **Extracto** | **Ext+GLMN** | **Ext+GLMN+FOS** |
| Glucose (%) | 5.6±0.2 | 2.9±0.3 | 2.3±0.7 | 4.8±0.0 | 3.2±0.2 | 2.8±0.6 |
| Fructose (%) | 7.1±0.3 | 3.6±0.2 | 4.6±0.4 | 5.7±0.2 | 3.9±0.2 | 4.5±0.3 |

| **Digested** | **E300 (Batch I)** | | | **E400 (Batch II)** | | |
|---|---|---|---|---|---|---|
| **samples** | **Extracto** | **Ext+GLMN** | **Ext+GLMN+FOS** | **Extracto** | **Ext+GLMN** | **Ext+GLMN+FOS** |
| Glucose (%) | 12.1±0.7 | 11.3±0.8 | 8.4±0.7 | 9.8±1.2 | 10.3±0.2 | 7.9±0.4 |
| Fructose (%) | 14.5±0.8 | 11.8±0.3 | 9.7±0.7 | 9.9±0.5 | 11.2±0.2 | 9.7±0.5 |

| | | | | | | |
|---|---|---|---|---|---|---|
| **Ext+GLMN** is the extract (E300 or E440) together with galactomannan from carob bean gum **Ext+GLMN+FOS** is the extract (E300 or E440) together with galactomannan from carob bean gum and fructooligosaccharides | | | | | | |

### 2. Total polar phenols (TPP) content

The extracts and their corresponding mixtures with galactomannan and FOS were initially analyzed to quantify their content in TPP by means of the Folin Ciocalteu method and also after digestion. As shown in **Table 2,** initially the TPP content of the E300 and E400 carob extracts is 4.21% and 4.29% respectively. When undergoing in vitro digestion, the decrease in TPP content was almost complete, between 86% (4.21-0.59%) and 98% (4.29-0.10%) respectively.

The addition of Galactomannan to the extract followed similar trend, the decrease in TPP content was very important after digestion, approximately 90% for E300 + galactomannan (2.06-0.2%) and also E400 + galactomannan (1.95-0.19%; **Table 2**).
However, when FOS is added to the blend, the polyphenol content decreased much lower compared to the previous results previous to FOS addition. The mixture of E300 + Galactomannan + FOS blend showed a 51% decrease in the TPP after digestion (2.31-1.14%), and the same result was obtained for the 400 + Galactomannan + FOS blend (2.17-1.06%) as can be observed in **Table 2.**

**Table 2. Initial composition of simple total polar phenols (expressed as percentage of Gallic acid by dry weight) and corresponding bioaccesibility after "in vitro" digestion of carob extracts, together with galactomannan and fructooligosaccharides.**

| **Initial samples** | **E300 (Batch I)** | | | **E400 (Batch II)** | | |
|---|---|---|---|---|---|---|
| | **Extract** | **Ext+GLMN** | **Ext+GLMN+FOS** | **Extract** | **Ext+GLMN** | **Ext+GLMN+FOS** |
| TPP (%, as Gallic acid equivalents) | 4.21±0.38 | 2.06±0.03 | 2.31±0.09 | 4.29±0.50 | 1.95±0.10 | 2.17±0.01 |

| **Digested samples** | **E300 (Batch I)** | | | **E400 (Batch II)** | | |
|---|---|---|---|---|---|---|
| | **Extract** | **Ext+GLMN** | **Ext+GLMN+FOS** | **Extract** | **Ext+GLMN** | **Ext+GLMN+FOS** |
| TPP (%, as Gallic acid equivalents) | 0.59±0.07 | 0.20±0.00 | 1.14±0.20 | 0.10±0.03 | 0.19±0.01 | 1.06±0.21 |

| | | | | | | |
|---|---|---|---|---|---|---|
| **Ext+GLMN** is the extract (E300 or E440) together with galactomannan from carob bean gum **Ext+GLMN+FOS** is the extract (E300 or E440) together with galactomannan from carob bean gum and fructooligosaccharides | | | | | | |

### 3. Antioxidant capacity

The extracts and their corresponding mixtures with Galactomannan and FOS were analyzed to quantify their antioxidant capacity content in the initial samples and after digestion, quantified by means of a Trolox (6-hydroxy-2,5,7,8-tetramethylchroman-2-carboxylic acid) calibration curve and expressed as percentage (dry weight). As shown in **Table 3,** the antioxidant capacity followed similar trend to the Total Polar Phenols content as expected due to their direct correlation.

For the E300 carob extract, the antioxidant capacity expressed by Trolox ratio was 12.8%, and after digestion, was reduced by approximately 88% (12.8-1.6%), and for the E400 extract, a 71% (12.75-3.69%). Once the extract was added the locust bean gum, the extract followed the same trend, reducing the Antioxidant Capacity content, reducing by 88.3% for E300 + galactomannan (7.2-0.8%) and 61% for E400 + galactomannan (7.3 - 2.8%). When FOS was added, there was a greater retention of the antioxidant capacity for the E300 + galactomannan + FOS extract, the decrease for this case was 71.6% (6.16-1.75%), while for E400 + galactomannan + FOS, There was no less decrease compared to the extract as such, decreasing antioxidant capacity by 71% (4.85-1.4%).

**Table 3. Antioxidant capacity (expressed as percentage of Trolox by dry weight) of the initial samples and corresponding bioaccesibility after "in vitro" digestion of carob extracts, together with galactomannan and fructooligosaccharides.**

| **Initial samples** | **E300 (Batch I)** | | | **E400 (Batch II)** | | |
|---|---|---|---|---|---|---|
| | **Extract** | **Ext+GLMN** | **Ext+GLMN+FOS** | **Extract** | **Ext+GLMN** | **Ext+GLMN+FOS** |
| Antioxidant Capacity (%, as Trolox equivalents) | 12.83±1.64 | 7.20±0.58 | 6.16±0.85 | 12.75±1.25 | 7.26±0.62 | 4.85±0.16 |

| **Digested samples** | **E300 (Batch I)** | | | **E400 (Batch II)** | | |
|---|---|---|---|---|---|---|
| | **Extract** | **Ext+GLMN** | **Ext+GLMN+FOS** | **Extract** | **Ext+GLMN** | **Ext+GLMN+FOS** |
| Antioxidant Capacity (%, as Trolox equivalents) | 1.60±0.11 | 4.84±1.43 | 1.75±0.29 | 3.69±0.43 | 2.83±0.29 | 1.40±0.12 |

| | | | | | | |
|---|---|---|---|---|---|---|
| **Ext+GLMN** is the extract (E300 or E440) together with galactomannan from carob bean gum **Ext+GLMN+FOS** is the extract (E300 or E440) together with galactomannan from carob bean gum and fructooligosaccharides | | | | | | |

## Claims

1. A composition comprising
- galactomannan in an amount of from 36% to 40% by weight based on the total weight of the composition,
- fructooligossacharides in an amount of from 2% to 4% by weight based on the total weight of the composition, and
- at least one bioactive compound of polar nature.

2. Composition according to claim 1, wherein the amount of galactomanan is 36% by weight based on the total weight of the composition and/or the amount of fructooligosascharide is 3% by weight based on the total weight of the composition.

3. Composition according to claim 1 or 2, wherein the galactomannan comprises a mannose:galactose ratio of 3:1.

4. Composition according to any one of claims 1 to 3, wherein the fructooligossacharide comprise no less than 90% of oligofructose (%, dry matter)

5. Composition according to any one of claims 1 to 4, wherein the bioactive compound is carob extract, particularly, carob seed extract or carob pod extract.

6. Composition according to claim 1 to 4, wherein the bioactive compound is, olive extract or a mixture of carob extract and olive extract.

7. Composition according to any of claims 1 to 6, wherein the bioactive compound of polar nature is in an amount of from 0.1% to 50% by weight based on the total weight of the composition.

8. Composition according to any of claims 1 to 7 for use as a medicament.

9. Composition according to any of claims 1 to 7 for use in the treatment and/or prevention of metabolism syndrome.

10. Use of a galactomannan in an amount of from 36% to 40% by weight based on the total weight of the composition, and a fructooligossacharide in an amount of from 2% to 4% by weight based on the total weight of the composition, for naturally encapsulating a bioactive compound.

11. Use of a composition according to claim 10, wherein the amount of galactomannan is 36% by weight based on the total weight of the composition and/or the amount of fructooligosaccharide is 3% by weight based on the total weight of the composition.

12. Use of a composition according to claim 10 or 11, wherein the galactomannan comprises a mannose:galactose ratio of about 3:1.

13. Use of a composition according to any one of claims 10 to 12, wherein the bioactive compound is a carob extract, particularly, carob seed extract or carob pod extract.

14. Use of a composition according to claim 13, wherein the bioactive compound further comprises one or more bioactive compounds different from carob extract.

15. Use of a composition according to any of claims 10 to 14, wherein the bioactive compound of polar nature are in an amount of from 0.1% to 50% by weight based on the total weight of the composition.
